# EUROPEAN PATENT SPECIFICATION

(11) **EP 3 450 167 B1**
(45) Date of publication and mention of the grant of the patent: **05.02.2020**
(21) Application number: 17211214.6
(22) Date of filing: 29.12.2017
(51) Int. Cl.: B33Y 30/00, B33Y 40/00, B29C 64/209, B29C 64/30, B29C 64/364, B29C 64/25, B05B 16/60

(54) **THREE-DIMENSIONAL PRINTER HAVING A DOOR LOCK STRUCTURE**
DREIDIMENSIONALER DRUCKER MIT TÜRSCHLOSSSTRUKTUR
IMPRIMANTE TRIDIMENSIONNELLE AYANT UNE STRUCTURE DE SERRURE DE PORTE

(30) Priority: 31.08.2017 CN 201710770677
(43) Date of publication of application: 06.03.2019
(73) Proprietor: XYZprinting, Inc., New Taipei City 22201 (TW); Kinpo Electronics, Inc., New Taipei City 22201 (TW)
(72) Inventor: LEE, Yang-Teh, 22201 New Taipei City (TW); JUANG, Jia-Yi, 22201 New Taipei City (TW); HSIEH, Yi-Chu, 22201 New Taipei City (TW)
(74) Representative: 2K Patentanwälte Blasberg Kewitz & Reichel

(56) References cited:
- DE-A1- 3 134 248
- US-B1- 6 305 769

## Description

### Technical Field

The technical field relates to a three-dimensional printer and, in particular, to a three-dimensional printer having a door lock structure.

### Background

Three-dimensional (3D) printing is one of rapid formation techniques, which utilizes a movable platform to drive a platform to move, and then dispenses a powdered material such as metal powder or plastic powder, so that successive layers of the powdered material are joined to form a 3D object. At present, toys, mechanical parts or replacement human bones can be made by 3D printing, which makes 3D printing become increasingly popular.

US6305769 (B1) discloses a system and associated method for forming three-dimensional objects under computer control and from a material which may be rendered flowable and then dispensed on a layer-by-layer basis. The layers of the material solidify or otherwise physically transform upon being dispensed thereby forming successive cross-sections. The dispensing process is repeated whereby successive layers adhere to each other thereby forming the object.

DE3134248 (A1) discloses a concept to save heating energy for heating the cabin air, in particular in the case of a spraying cabin having a large air volume, that is to say a comparatively large, in particular high, cabin, during the spraying pauses or before commencement of spraying, during preparation of the material to be sprayed for the spraying operation, the ventilation can be switched over from exhaust air to recirculating air. In exhaust-air operation, which is known per se, air is fed via a fresh-air duct whereas the air loaded with paint mist and the like is conducted to the outside via the exhaust-air duct. The switch-over from fresh-air operation to recirculating-air operation and vice versa is carried out via a first pivot flap, which is coupled in terms of movement to a second pivot flap. In the cabin interior there is disposed a lifting platform and a rest mount for at least one spray gun. When the latter is picked up, it effects a locking of the cabin door, an adjustment of the pivot flaps, that is to say switch-over from recirculating-air operation to exhaust-air operation and fresh-air operation and the enabling of a central coating-material and paint feed. The switch-over when the spray gun is put down is preferably carried out via a delay device, however at least the blocking of the coating-material feed takes place immediately.

However, 3D printing also involves a coloring printing mode in which a coloring nozzle is used to color a laminated object constituted by the powdered material, and a large amount of powder is generated during the coloring printing period. Powder is discharged to ambient environment and causes pollution if a door of the 3D printer is opened, during the printing period or shortly after printing stops, before the powder is reduced to an acceptable small amount. Therefore, there is a need for a 3D printer which prevents powder from polluting the environment by confining the powder in the 3D printer.

Accordingly, in order to solve the above disadvantage, the inventor studied related technology and provided a reasonable and effective solution in the present disclosure.

### SUMMARY

The present invention is directed to a three-dimensional printer having a door lock structure according to claim 1. By using the door lock structure, a door panel stays at a closed position. The door panel is not released until powder in a housing is drawn away after the coloring nozzle set stops operating, thereby preventing the powder from being discharged to the outside of a housing and thus maintaining good ambient air quality.

According to one embodiment of the present disclosure, a three-dimensional printer having a door lock structure is provided, comprising a housing, a door panel, a door lock structure, an actuator, a formation nozzle member, a coloring nozzle set, an exhaust fan structure, and a controller. The housing includes a chamber inside and an opening communicating with the chamber. The door panel is pivotally connected to the housing and is movable between a closed position which closes the opening and an open position which exposes the opening. The door lock structure is disposed corresponding to the door panel, and the door lock structure includes a locking position and an unlocking position. The actuator is connected to the door lock structure and drives the door lock structure to lock or unlock the door panel. The formation nozzle member is installed in the chamber and is movable therein, and the formation nozzle member is used to print a laminated object. The coloring nozzle set is installed in the chamber and is movable therein, and the coloring nozzle set is used to color the laminated object. The exhaust fan structure is assembled to the housing and communicates with the chamber, and the exhaust fan structure is used to draw air from the housing and discharge the air to the outside of the housing. The controller is electrically connected the actuator, the formation nozzle member, the coloring nozzle set, and the exhaust fan structure, wherein the control controls the actuator to drive the door lock structure to the locking position. When the door panel is at the closed position, the door lock structure locks the door panel, and the controller is allowed to activate a printing mode. The printing mode includes, by using the controller, controlling the formation nozzle member and the coloring nozzle set to perform three-dimensional printing and controlling the exhaust fan structure to keep operating. The controller activates an unlocking mode after a predetermined time after operation of the coloring nozzle set is stopped. In the unlocking mode, the controller controls the actuator to drive the door lock structure to the unlocking position to release the door panel.

A large amount of powder is generated during the printing mode, but the door lock structure locks the door panel to keep it at the closed position, thus preventing the door panel from being opened during the printing mode or shortly after the printing mode is ended, thereby preventing the powder from being discharged to the outside of the housing and maintaining good ambient air quality.

The door lock structure does not release the door panel until the powder inside the housing is discharged to the outside of the housing after the predetermined time after operation of the coloring nozzle set is stopped. Accordingly, the powder is prevented from being discharged to the outside of the housing, and good ambient air quality is maintained.

### BRIEF DESCRIPTION OF THE DRAWINGS

The disclosure will become more fully understood from the detailed description, and the drawings given herein below is for illustration only, and thus does not limit the disclosure, wherein:
FIG. 1 is a perspective assembled view illustrating a three-dimensional printer of the present disclosure;
FIG. 2 is a perspective exploded view illustrating a door lock structure according to the present disclosure;
FIG. 3 is a schematic view illustrating a door lock structure in use;
FIG. 4 is a diagram illustrating the three-dimensional printer;
FIG. 5 is a schematic view illustrating the three-dimensional printer in use;
FIG. 6 is another schematic view illustrating the door lock structure in use; and
FIG. 7 is another diagram illustrating the three-dimensional printer.

### DETAILED DESCRIPTION

Detailed descriptions and technical contents of the present disclosed example are illustrated below in conjunction with the accompanying drawings. However, it is to be understood that the descriptions and the accompanying drawings disclosed herein are merely illustrative and exemplary and not intended to limit the scope of the present disclosed example.

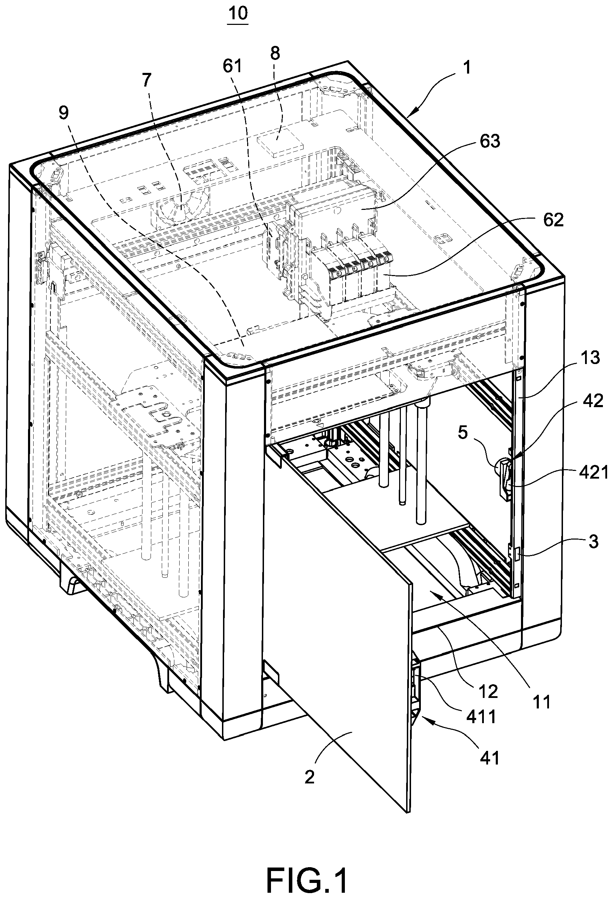

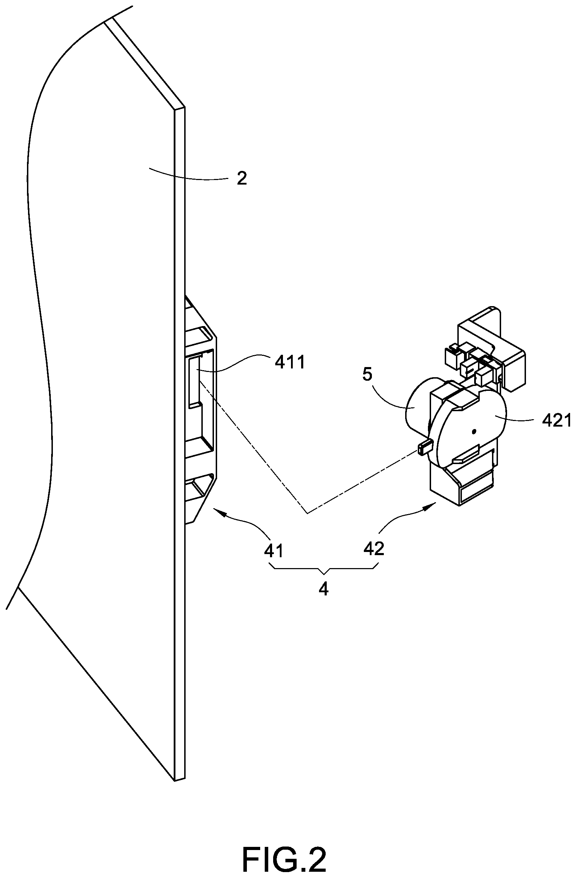

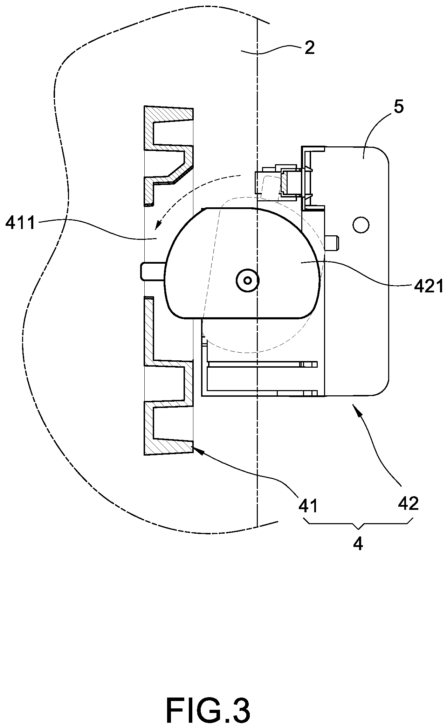

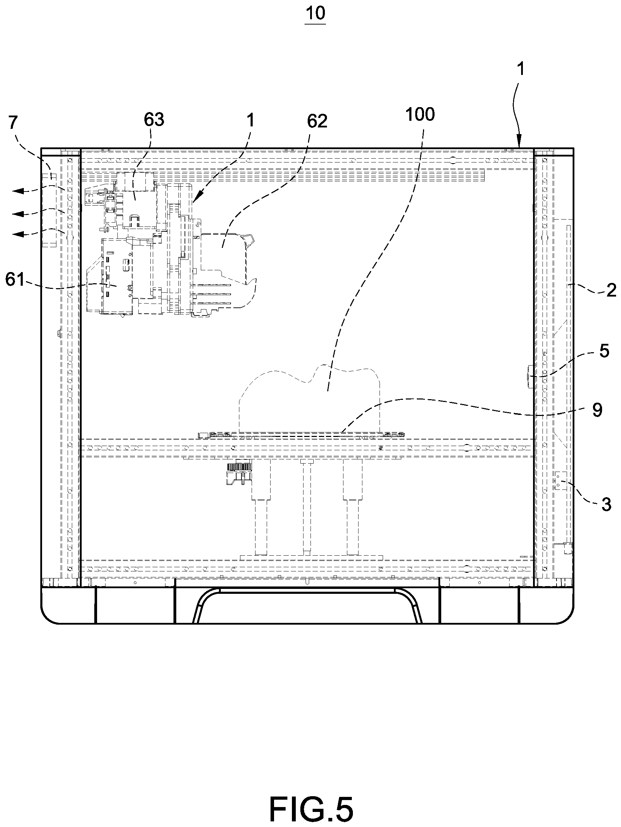

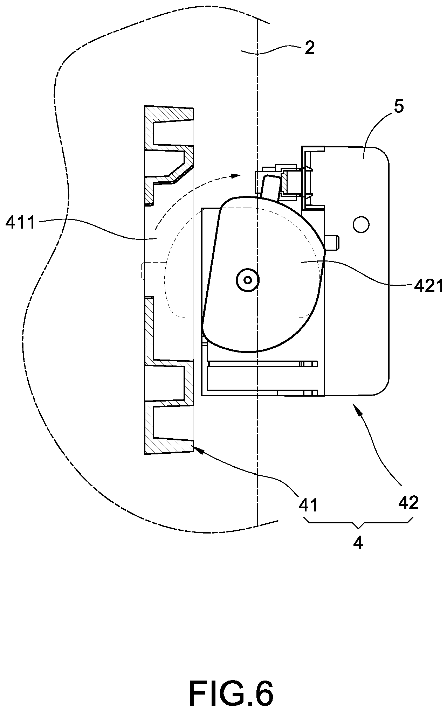

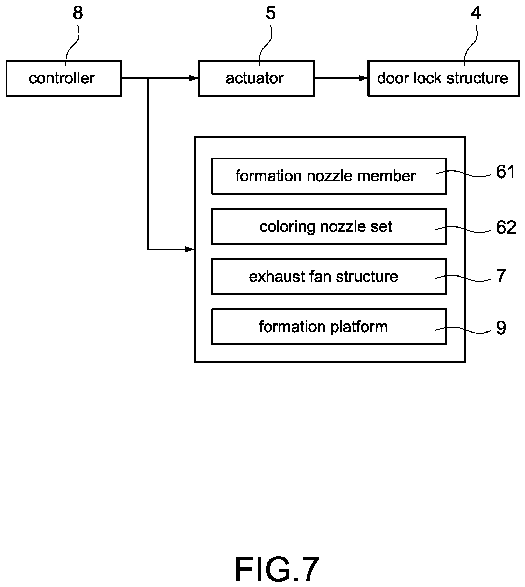

Referring to Figs. 1 to 7, the present disclosure provides a three-dimensional printer having a door lock structure. The three-dimensional printer 10 includes a housing 1, a door panel 2, a door lock structure 4, an actuator 5, a formation nozzle member 61, a coloring nozzle set 62, an exhaust fan structure 7, and a controller 8.

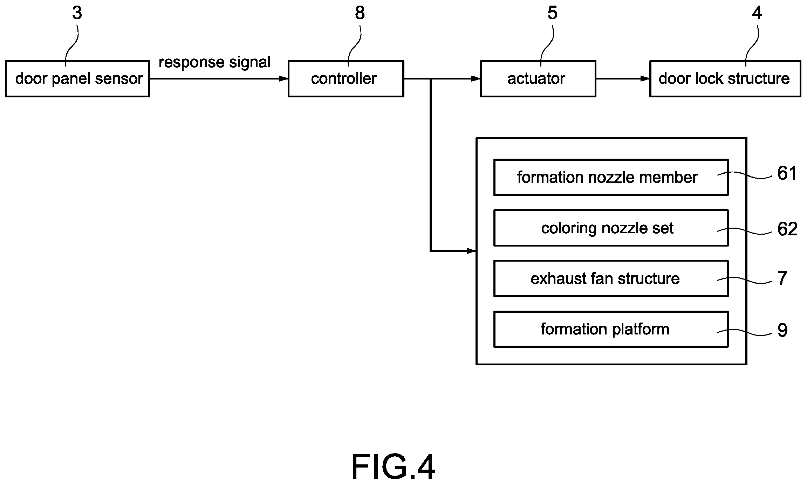

Referring to Figs. 1 and 4, the housing 1 includes a chamber 11 inside and an opening 12 communicating with the chamber 11. A block plate 13 extends from one side of the opening 12 of the housing 1.

As shown in Figs. 1 to 3, the door panel 2 is pivotally connected to the housing 1, the door panel 2 is movable between a closed position which closes the opening 12 and an open position which exposes the opening 12. When the door panel 2 is moved to the closed position, the door panel 2 is blocked by the block plate 13.

As shown in Fig. 1, the three-dimensional printer 10 further includes a door panel sensor 3 disposed corresponding to the door panel 2. The door panel sensor 3 is used to generate a response signal when the door panel sensor 3 senses that the door panel 2 is at the closed position. The door panel sensor 3 is fixed to the block plate 13; however, the present disclosure is not limited in this regard.

Referring to Figs. 1 to 3, the door lock structure 4 is disposed corresponding to the door panel 2. The door lock structure 4 has a locking position and an unlocking position. The door lock structure 4 includes a lock hole element 41 fixed to the door panel 2 and a latch structure 42 fixed to the housing 1. The lock hole element 41 has a lock hole 411. The latch structure 42 has a pivot member 421. In the locking position, the pivot member 421 is inserted in the lock hole 411. In the unlocking position, the pivot member 421 is detached from the lock hole 411. In the present embodiment, the latch structure 42 is fixed to the block plate 13; however, the present disclosure is not limited in this regard.

Referring to Figs. 1 to 3, the actuator 5 is connected to the door lock structure 4 and drives the door lock structure 4 to lock or unlock the door panel 2. In detail, the actuator 5 can drive the pivot member 421 to be inserted in the lock hole 411 to thereby lock the door panel 2. The actuator 5 can drive the pivot member 421 to be detached from the lock hole 411 to release the door panel 2. In the present embodiment, the actuator 5 is a motor; however, the present disclosure is not limited in this regard.

As shown in Figs. 1 and 4, the formation nozzle member 61 and the coloring nozzle set 62 are installed in the chamber 11 and movable therein. The formation nozzle member 61 is used to print a laminated object 100. The coloring nozzle set 62 is used to color the laminated object 100. In the present embodiment, the three-dimensional printer 10 further includes a drive base 63. The formation nozzle member 61 and the coloring nozzle set 62 are fixed to the drive base 63, so that the formation nozzle member 61 and the coloring nozzle set 62 are movable along with the drive base 63; however, the present disclosure is not limited in this regard, which means the formation nozzle member 61 and the coloring nozzle set 62 can move independently.

As shown in Figs. 1 and 4, the exhaust fan structure 7 is assembled to the housing 1 and communicates with the chamber 11. The exhaust fan structure 7 is used to draw air from inside the housing 1 and discharge the air to the outside of the housing 1.

As shown in Fig. 1, the controller 8 is electrically connected to the door panel sensor 3, the actuator 5, the formation nozzle member 61, the coloring nozzle set 62, and the exhaust fan structure 7.

As shown in Figs. 1 and 4, the three-dimensional printer 10 further includes a formation platform 9. The formation platform 9 is installed in the chamber 11 and is electrically connected to the controller 8, and the controller 8 controls the formation platform 9 to move from an original position.

As shown in Figs. 1 to 4 illustrating the three-dimensional printer 10 in use, the door panel sensor 3 senses that the door panel 2 is at the closed position and generates a response signal. After the controller 8 receives the response signal, the controller 8 controls the actuator 5 to drive the door lock structure 4 to the locking position. When the door panel 2 is at the closed position, the controller 8 activates a printing mode. The printing mode can be carried out via two embodiments. Figs. 1 to 4 show the printing mode carried out via the first embodiment. To be specific, in the printing mode, the controller 8 controls the formation nozzle member 61 and the coloring nozzle set 62 to perform three-dimensional printing, keeps the exhaust fan structure 7 in operation, and activates the formation platform 9, so that the laminated object 100 is laminated layer by layer on the formation platform 9 via the formation nozzle member 61, the coloring nozzle set 62 then colors the laminated object 100. The coloring nozzle set 62 generates a large amount of powder during the printing mode. The door panel 2 is locked by the door lock structure 4 to keep in the closed position, so as to ensure that the powder is not discharged to the outside of the housing 1 during the printing mode or shortly after the printing mode is ended, thus maintaining good air quality around the three-dimensional printer 10.

Please refer to Figs. 1, 5 to 7 showing the three-dimensional printer 10 in use according to another embodiment. After the printing mode of the first embodiment is ended, the controller 8 controls the formation nozzle member 61 and the coloring nozzle set 62 to stop operating, and controls the formation platform 9 to return to its original position. Then, an unlocking mode is activated after a predetermined time after the controller 8 determines that the coloring nozzle set 62 stops operating. From when the coloring nozzle set 62 stops operating to the predetermined time, the controller 8 controls the exhaust fan structure 7 to keep operating, so that the powder inside the housing 1 is drawn and discharged to the outside of the housing 1 by the exhaust fan structure 7. At last, the unlocking mode is activated, wherein the controller 8 controls the actuator 5 to drive the door lock structure 4 to the unlocking position, so that the door panel 2 is released, and the door panel 2 is allowed to move to the open position. Accordingly, from when the coloring nozzle set 62 stops operating to the predetermined time, the powder inside the housing 1 is continuously drawn and discharged to the outside of the housing 1, and the door lock structure 4 does not release the door panel until the amount of powder inside the housing 1 is acceptably small, thereby preventing the powder from being discharged to the outside of the housing 1 and ensuring good ambient air quality.

After the predetermined time after the coloring nozzle set 62 stops operating, the controller 8 controls the exhaust fan structure 7 to stop operating. Alternatively, the exhaust fan structure 7 is kept in operation after the three-dimensional printer 10 is powered on, which means, before or after the printing mode, the exhaust fan structure 7 keeps drawing the air inside the housing 1 and discharge the air to the outside of the housing 1.

According to the first embodiment for carrying out the printing mode, the predetermined time is calculated as follows. A fixed time is calculated after operation of the coloring nozzle set 62 is stopped. If the fixed time is later than the time when the printing mode is ended, the predetermined time is the fixed time. If the fixed time is earlier than the time when the printing mode is ended, the predetermined time is the time when the printing mode is ended. For example, the fixed time is 10 seconds after the coloring nozzle set 62 stops operating, if it takes 10 seconds for the exhaust fan structure 7 to draw the excess powder generated by the coloring nozzle set 62 to the outside of the housing 1 after operation of the coloring nozzle set 62 is stopped. But the printing mode is ended after 9 seconds after the coloring nozzle set 62 finishes printing. Since the fixed time is later than the time when the printing mode is ended, the predetermined time is the fixed time, i.e. 10 seconds after the coloring nozzle set 62 stops operating. In contrast, if the printing mode is ended after 11 seconds after the coloring set 62 finishes printing, in that case, because the fixed time is earlier than the time when the printing mode is ended, the predetermined time is the time when the printing mode is ended, i.e. 11 seconds after the coloring nozzle set 62 finishes printing. Please be noted that, the description mentioned above is only an example describing how to calculate the determined time, but the fixed time and the predetermined time are not limited to any specified amount of time.

A description about the second embodiment for carrying out the printing mode is provided below. The printing mode includes, by using the controller 8, controlling the formation nozzle member 61 and the coloring nozzle set 62 to perform three-dimensional printing, keeping the exhaust fan structure 7 in operation, and activating the formation platform 9. However, ending of the printing mode does not include activating or stopping the formation nozzle member 61 and does not include making the formation platform 9 return. It is because the target of the present disclosure is to prevent the powder from being discharged to the outside of the housing, and therefore, in the second embodiment, ending of the printing mode does not need to consider whether to activate the formation nozzle member 61 or not, and also does not need to consider whether to make the formation platform 9 return or not.

To be specific, in the second embodiment, when the printing mode is ended, the controller 8 only controls the coloring nozzle set 62 to stop operation, but the formation nozzle member 61 and the formation platform 9 can keep operating. From when the coloring nozzle set 62 stops operating to the predetermined time, the controller 8 controls the exhaust fan structure 7 to keep operative, so that the powder inside the housing 1 is continuously discharged to the outside of the housing 1 by the exhaust fan structure 7. At last, the unlocking mode is activated after the predetermined time after the coloring nozzle set 62 stops operating. In the unlocking mode, the controller 8 controls the actuator 5 to drive the door lock structure 4 to release the door panel 2, so that the door panel 2 can be moved to the open position. Compared to the printing mode of the first embodiment, the printing mode of the second embodiment is different in that, the door lock structure 4 releases the door panel 2 when the coloring nozzle set 62 stops operating, although the formation nozzle member 61 and the formation platform 9 still keep operating. As a result, when the door panel 2 is opened, the formation nozzle member 61 and the formation platform 9 keep operating.

Furthermore, compared to the printing mode of the first embodiment, the printing mode of the second embodiment is also different in that, the predetermined time is calculated differently. In the second embodiment, the time when the printing mode is ended is the time when the coloring nozzle set stops operating. Therefore, the predetermined time is the fixed time calculated after the coloring nozzle set 62 stops operating. For example, the fixed time is 10 seconds if it takes 10 seconds, after the coloring nozzle set 62 stops operating, for the exhaust fan structure 7 to draw and discharge the powder generated by the coloring nozzle set 62 during printing to the outside of the housing 1. In that case, the predetermined time is the fixed time, i.e. 10 seconds after the coloring nozzle set 62 stops operating. Please be noted that, the description mentioned above is only an example describing how to calculate the determined time, but the fixed time and the predetermined time are not limited to any specified amount of time.

## Claims

1. A three-dimensional printer having a door lock structure, comprising:
a housing (1), the housing (1) including a chamber (11) inside and an opening (12) communicating with the chamber (11);
a door panel (2) pivotally connected to the housing (1), the door panel (2) being movable between a closed position which closes the opening (12) and an open position which exposes the opening (12);
a door lock structure (4) disposed corresponding to the door panel (2), the door lock structure (4) including a locking position and an unlocking position;
an actuator (5) connected to the door lock structure (4) and driving the door lock structure (4) to lock or unlock the door panel (2);
a formation nozzle member (61) installed in the chamber (11) and being movable therein, the formation nozzle member (61) printing a laminated object (100);
a coloring nozzle set (62) installed in the chamber (11) and being movable therein, the coloring nozzle set (62) coloring the laminated object (100);
an exhaust fan structure (7) assembled to the housing (1) and communicating with the chamber (11), the exhaust fan structure (7) drawing air from the housing (1) and discharging the air to the outside of the housing (1); and
a controller (8) electrically connected the actuator (5), the formation nozzle member (61), the coloring nozzle set (62), and the exhaust fan structure (7), wherein the controller (8) controls the actuator (5) to drive the door lock structure (4) to the locking position; when the door panel (2) is at the closed position, the door lock structure (4) locks the door panel (2), and the controller (8) is allowed to activate a printing mode; the printing mode including, by using the controller (8), controlling the formation nozzle member (61) and the coloring nozzle set (62) to perform three-dimensional printing and controlling the exhaust fan structure (7) to keep operating; the controller (8) activates an unlocking mode after a predetermined time if the controller (8) determines that operation of the coloring nozzle set (62) is stopped, wherein the controller (8) controls the exhaust fan structure (7) to keep operating during said predetermined time;
and in the unlocking mode, the controller (8) controls the actuator (5) to drive the door lock structure (4) to the unlocking position to release the door panel (2).

2. The three-dimensional printer having the door lock structure according to claim 1, wherein a fixed time is calculated after operation of the coloring nozzle set (62) is stopped, and the predetermined time is the fixed time.

3. The three-dimensional printer having the door lock structure according to claim 2, wherein when the printing mode is ended, the controller (8) controls the coloring nozzle set (62) to stop operation, and the controller (8) controls the exhaust fan structure (7) to keep operating from when the printing mode is ended to the predetermined time.

4. The three-dimensional printer having the door lock structure according to claim 1, further comprising a formation platform (9), the formation platform (9) being assembled in the chamber (11) and electrically connected to the controller (8), the printing mode further including, by using the controller (8), controlling the formation platform (9) to move from an original position; wherein after the printing mode is ended, the controller (8) controls the formation nozzle member (61) and the coloring nozzle set (62) to stop operating; the controller (8) controls the formation platform (9) to return to the original position, and the controller (8) controls the exhaust fan structure (7) to keep operative from when the printing mode is ended to the predetermined time.

5. The three-dimensional printer having the door lock structure according to claim 4, wherein a fixed time is calculated after operation of the coloring nozzle set (62) is stopped; the predetermined time is the fixed time if the fixed time is later than the time when the printing mode is ended; and the predetermined time is the time when the printing mode is ended if the fixed time is earlier than the time when the printing mode is ended.

6. The three-dimensional printer having the door lock structure according to claim 1, wherein the controller (8) controls the exhaust fan structure (7) to stop operating after the predetermined time after operation of the coloring nozzle set (62) is stopped.

7. The three-dimensional printer having the door lock structure according to claim 1, further comprising a door panel sensor (3), the door panel sensor (3) being disposed corresponding to the door panel (2) and electrically connected to the controller (8), the door panel sensor (3) generating a response signal if the door panel sensor (3) senses that the door panel (2) is at the closed position, the controller (8) controlling the actuator (5) to drive the door lock structure (4) to lock the door panel (2) when the controller (8) receives the response signal.

8. The three-dimensional printer having the door lock structure according to claim 1, wherein the door lock structure (4) includes a lock hole element (41) fixed to the door panel (2) and includes a latch structure (42) fixed to the housing (1), the lock hole element (41) includes a lock hole (411), the latch structure (42) includes a pivot member (421), the actuator (5) drives the pivot member (421) to be inserted in the lock hole (411) to lock the door panel (2), the actuator (5) drives the pivot member (421) to be detached from the lock hole (411) to thereby release the door panel (2), the locking position is a position which inserts the pivot member (421) into the lock hole (411), and the unlocking position is a position which detaches the pivot member (421) from the lock hole (411).

9. The three-dimensional printer having the door lock structure according to claim 8, wherein a block plate (13) extends from one side of the opening (12) of the housing (1), the door panel (2) is blocked by the block plate (13), and the door panel sensor (3) is fixed to the block plate (13).

10. The three-dimensional printer having the door lock structure according to claim 9, wherein the latch structure (42) is fixed to the block plate (13).

11. The three-dimensional printer having the door lock structure according to claim 1, further including a drive base (63), wherein the drive base (63) is installed in the chamber (11) and movable therein, and the formation nozzle member (61) and the coloring nozzle set (62) are fixed to the drive base (63), so that the formation nozzle member (61) and the coloring nozzle set (62) are movable along with the drive base (63).

## Patentansprüche

1. Ein dreidimensionaler Drucker mit einer Türverriegelungsstruktur, umfassend:
ein Gehäuse (1), wobei das Gehäuse (1) eine Kammer (11) im Inneren und eine Öffnung (12) aufweist, die mit der Kammer (11) verbunden ist;
eine Türverkleidung (2), die schwenkbar mit dem Gehäuse (1) verbunden ist, wobei die Türverkleidung (2) zwischen einer geschlossenen Position, die die Öffnung (12) schließt, und einer offenen Position, die die Öffnung (12) freilegt, beweglich ist;
eine Türverriegelungsstruktur (4), die entsprechend der Türverkleidung (2) angeordnet ist, wobei die Türverriegelungsstruktur (4) eine Verriegelungsposition und eine Entriegelungsposition beinhaltet;
ein Stellglied (5), das mit der Türverriegelungsstruktur (4) verbunden ist und die Türverriegelungsstruktur (4) antreibt, um das Türblatt (2) zu ver- oder entriegeln;
ein Formationsdüsenelement (61), das in der Kammer (11) installiert und darin beweglich ist, wobei das Formationsdüsenelement (61) ein laminiertes Objekt (100) druckt;
einen Farbdüsensatz (62), der in der Kammer (11) installiert und darin beweglich ist, wobei der Farbdüsensatz (62) das laminierte Objekt (100) färbt;
eine Abluftventilatorstruktur (7), die an dem Gehäuse (1) montiert ist und mit der Kammer (11) in Verbindung steht, wobei die Abluftventilatorstruktur (7) Luft aus dem Gehäuse (1) saugt und die Luft nach außen aus dem Gehäuse (1) abgibt; und
eine Steuerung (8), die elektrisch mit dem Stellglied (5), dem Formationsdüsenelement (61), dem Farbdüsensatz (62) und der Abluftventilatorstruktur (7) verbunden ist, wobei die Steuerung (8) das Stellglied (5) steuert, um die Türverriegelungsstruktur (4) in die Verriegelungsposition zu fahren; wenn sich die Türverkleidung (2) in der geschlossenen Position befindet, die Türverriegelungsstruktur (4) die Türverkleidung (2) verriegelt und die Steuerung (8) einen Druckmodus aktivieren kann; wobei der Druckmodus unter Verwendung der Steuerung (8) das Steuern des Formationsdüsenelements (61) und des Farbdüsen-Sets (62) zum dreidimensionalen Drucken und Steuern der Abluftventilatorstruktur (7) zum Aufrechterhalten des Betriebs beinhaltet; die Steuerung (8) nach einer vorbestimmten Zeit einen Entriegelungsmodus aktiviert, wenn die Steuerung (8) bestimmt, dass der Betrieb des Färbedüsensatzes (62) gestoppt wird; wobei die Steuerung (8) die Abluftventilatorstruktur (7) steuert, um während der vorbestimmten Zeit in Betrieb zu bleiben; und die Steuerung (8) im Entriegelungsmodus das Stellglied (5) steuert, um die Türverriegelungsstruktur (4) in die Entriegelungsposition zu treiben, um die Türverkleidung (2) zu lösen.

2. Dreidimensionaler Drucker mit der Türverriegelungsstruktur nach Anspruch 1, wobei eine feste Zeit berechnet wird, nachdem der Betrieb des Farbdüsensatzes (62) gestoppt wurde, und die vorbestimmte Zeit die feste Zeit ist.

3. Dreidimensionaler Drucker mit der Türverriegelungsstruktur nach Anspruch 2, wobei, wenn der Druckmodus beendet ist, die Steuerung (8) den Farbdüsensatz (62) steuert, um den Betrieb zu stoppen, und die Steuerung (8) die Absaugventilatorstruktur (7) steuert, um den Betrieb von dem Zeitpunkt, an dem der Druckmodus beendet wird, bis zu der vorbestimmten Zeit aufrechtzuerhalten.

4. Dreidimensionaler Drucker mit der Türverriegelungsstruktur nach Anspruch 1, ferner umfassend eine Formationsplattform (9), wobei die Formationsplattform (9) in der Kammer (11) montiert und elektrisch mit der Steuerung (8) verbunden ist, wobei der Druckmodus ferner unter Verwendung der Steuerung (8) das Steuern der Formationsplattform (9) zum Bewegen aus einer Ausgangsposition beinhaltet; wobei nach Beendigung des Druckmodus die Steuerung (8) das Formationsdüsenelement (61) und den Farbdüsensatz (62) steuert, um den Betrieb einzustellen; die Steuerung (8) die Formationsplattform (9) steuert, um in die Ausgangsposition zurückzukehren, und die Steuerung (8) die Abluftventilatorstruktur (7) steuert, um von dem Zeitpunkt an, an dem der Druckmodus beendet wird, bis zu der vorgegebenen Zeit in Betrieb zu bleiben.

5. Dreidimensionaler Drucker mit der Türverriegelungsstruktur nach Anspruch 4, wobei eine feste Zeit berechnet wird, nachdem der Betrieb des Farbdüsensatzes (62) gestoppt wird; die vorbestimmte Zeit die feste Zeit ist, wenn die feste Zeit später als die Zeit ist, in der der Druckmodus beendet wird; und die vorbestimmte Zeit die Zeit ist, in der der Druckmodus beendet wird, wenn die feste Zeit früher als die Zeit ist, in der der Druckmodus beendet wird.

6. Der dreidimensionale Drucker mit der Türverriegelungsstruktur nach Anspruch 1, wobei die Steuerung (8) die Abluftventilatorstruktur (7) steuert, um den Betrieb nach der vorbestimmten Zeit nach dem Stoppen des Betriebs des Färbedüsensatzes (62) einzustellen.

7. Dreidimensionaler Drucker mit der Türverriegelungsstruktur nach Anspruch 1, ferner umfassend einen Türflügelsensor (3), wobei der Türflügelsensor (3) entsprechend der Türverkleidung (2) angeordnet und elektrisch mit der Steuerung (8) verbunden ist, wobei der Türflügelsensor (3) ein Antwortsignal erzeugt, wenn der Türflügelsensor (3) erkennt, dass sich die Türverkleidung (2) in der geschlossenen Position befindet, wobei die Steuerung (8) das Stellglied (5) steuert, um die Türverriegelungsstruktur (4) anzutreiben, um die Türverriegelung (2) zu verriegeln, wenn die Steuerung (8) das Antwortsignal empfängt.

8. Dreidimensionaler Drucker mit der Türverriegelungsstruktur nach Anspruch 1, wobei die Türverriegelungsstruktur (4) ein an der Türverkleidung (2) befestigtes Verriegelungslochelement (41) und eine am Gehäuse (1) befestigte Verriegelungsstruktur (42) beinhaltet, das Verriegelungslochelement (41) ein Verriegelungsloch (411) beinhaltet, die Verriegelungsstruktur (42) ein Schwenkglied (421) beinhaltet, das Stellglied (5) das in das Verriegelungsloch (411) einzusetzende Schwenkelement (421) antreibt, um das Türblatt (2) zu verriegeln, das Stellglied (5) das von dem Verriegelungsloch (411) zu lösende Schwenkelement (421) antreibt, um dadurch das Türblatt (2) freizugeben, die Verriegelungsposition eine Position ist, die das Schwenkelement (421) in das Verriegelungsloch (411) einführt, und die Entriegelungsposition eine Position ist, die das Schwenkelement (421) von dem Verriegelungsloch (411) löst.

9. Dreidimensionaler Drucker mit der Türverriegelungsstruktur nach Anspruch 8, wobei sich eine Blockplatte (13) von einer Seite der Öffnung (12) des Gehäuses (1) erstreckt, die Türplatte (2) durch die Blockplatte (13) blockiert ist und der Türflügelsensor (3) an der Blockplatte (13) befestigt ist.

10. Der dreidimensionale Drucker mit der Türverriegelungsstruktur nach Anspruch 9, wobei die Verriegelungsstruktur (42) an der Blockplatte (13) befestigt ist.

11. Der dreidimensionale Drucker mit der Türverriegelungsstruktur nach Anspruch 1, der ferner eine Antriebsbasis (63) beinhaltet, wobei die Antriebsbasis (63) in der Kammer (11) installiert und darin beweglich ist, und das Formationsdüsenelement (61) und der Farbdüsensatz (62) an der Antriebsbasis (63) befestigt sind, so dass das Formationsdüsenelement (61) und der Farbdüsensatz (62) zusammen mit der Antriebsbasis (63) beweglich sind.

## Revendications

1. Une imprimante tridimensionnelle ayant une structure de verrouillage de porte, comprenant:
un boîtier (1), le boîtier (1) comprenant une chambre (11) à l'intérieur et une ouverture (12) communiquant avec la chambre (11);
un panneau de porte (2) relié de façon pivotante au boîtier (1), le panneau de porte (2) étant mobile entre une position fermée qui ferme l'ouverture (12) et une position ouverte qui expose l'ouverture (12);
une structure de verrouillage de porte (4) disposée en correspondance avec le panneau de porte (2), la structure de verrouillage de porte (4) comprenant une position de verrouillage et une position de déverrouillage;
un actionneur (5) connecté à la structure de verrouillage de porte (4) et entraînant la structure de verrouillage de porte (4) dans un verrouillage ou déverrouillage du panneau de porte (2);
un élément de buse de formation (61) installé dans la chambre (11) et mobile à l'intérieur, l'élément de buse de formation (61) imprimant un objet stratifié (100);
un ensemble de buses de coloration (62) installé dans la chambre (11) et pouvant être déplacé à l'intérieur, l'ensemble de buses de coloration (62) colorant l'objet stratifié (100);
une structure de ventilateur d'échappement (7) assemblée au boîtier (1) et communiquant avec la chambre (11), la structure de ventilateur d'échappement (7) aspirant l'air du boîtier (1) et évacuant l'air à l'extérieur du boîtier (1)); et
un contrôleur (8) connecté électriquement à l'actionneur (5), à l'élément de buse de formation (61), à l'ensemble de buses de coloration (62) et à la structure de ventilateur d'échappement (7), dans lequel le contrôleur (8) commande l'actionneur (5) pour entraîner la structure de verrouillage de porte (4) en position de verrouillage; lorsque le panneau de porte (2) est en position fermée, la structure de verrouillage de porte (4) verrouille le panneau de porte (2) et le contrôleur (8) permet l'activation d'un mode d'impression; le mode d'impression comprenant, en utilisant le contrôleur (8), la commande de l'élément de buse de formation (61) et l'ensemble de buses de coloration (62) pour effectuer une impression tridimensionnelle et la commande de la structure du ventilateur d'échappement (7) pour poursuivre le fonctionnement; le contrôleur (8) active un mode de déverrouillage après un temps prédéterminé si le contrôleur (8) détermine que le fonctionnement de l'ensemble de buses de coloration (62) est arrêté;
dans lequel le contrôleur (8) commande la structure de ventilateur d'échappement (7) pour poursuivre le fonctionnement durant ledit temps prédéterminé ;
et dans le mode de déverrouillage, le contrôleur (8) commande l'actionneur (5) pour entraîner la structure de verrouillage de porte (4) en position de déverrouillage pour libérer le panneau de porte (2).

2. L'imprimante tridimensionnelle ayant la structure de verrouillage de porte selon la revendication 1, dans laquelle un temps fixe est calculé après l'arrêt du fonctionnement de l'ensemble de buses de coloration (62), et le temps prédéterminé est le temps fixe.

3. L' imprimante tridimensionnelle ayant la structure de verrouillage de porte selon la revendication 2, dans laquelle lorsque le mode d'impression est terminé, le contrôleur (8) commande l'arrêt du fonctionnement de l'ensemble de buses de coloration (62), et le contrôleur (8) contrôle la structure de ventilateur d'échappement (7) pour continuer à fonctionner depuis la fin du mode d'impression jusqu'à l'instant prédéterminé.

4. L'imprimante tridimensionnelle ayant la structure de verrouillage de porte selon la revendication 1, comprenant en outre une plate-forme de formation (9), la plate-forme de formation (9) étant assemblée dans la chambre (11) et connectée électriquement au contrôleur (8), le mode d'impression comprenant en outre, en utilisant le contrôleur (8), la commande de la plate-forme de formation (9) pour se déplacer à partir d'une position d'origine; dans lequel, une fois le mode d'impression terminé, le contrôleur (8) commande l'élément de buse de formation (61) et l'ensemble de buses de coloration (62) pour un arrêt de fonctionnement; le contrôleur (8) commande la plate-forme de formation (9) pour revenir à sa position d'origine, et le contrôleur (8) commande la structure du ventilateur d'échappement (7) pour la poursuite du fonctionnement à partir du moment où le mode d'impression est terminé jusqu'au moment prédéterminé.

5. L'imprimante tridimensionnelle ayant la structure de verrouillage de porte selon la revendication 4, dans laquelle un temps fixe est calculé après l'arrêt du fonctionnement de l'ensemble de buses de coloration (62); le temps prédéterminé est le temps fixe si le temps fixe est postérieur au moment où le mode d'impression est terminé; et le temps prédéterminé est le moment où le mode d'impression est terminé si le temps fixe est antérieur au moment où le mode d'impression est terminé.

6. L'imprimante tridimensionnelle ayant la structure de verrouillage de porte selon la revendication 1, dans laquelle le contrôleur (8) commande la structure de ventilateur d'échappement (7) pour arrêter de fonctionner après le temps prédéterminé après l'arrêt du jeu de buses de coloration (62).

7. L'imprimante tridimensionnelle ayant la structure de verrouillage de porte selon la revendication 1, comprenant en outre un capteur de panneau de porte (3), le capteur de panneau de porte (3) étant disposé en correspondance avec le panneau de porte (2) et étant connecté électriquement au contrôleur (8), le capteur de panneau de porte (3) génère un signal de réponse si le capteur de panneau de porte (3) détecte que le panneau de porte (2) est en position fermée, le contrôleur (8) commandant l'actionneur (5) pour entraîner la structure de verrouillage de porte (4) pour verrouiller le panneau de porte (2) lorsque le contrôleur (8) reçoit le signal de réponse.

8. L'imprimante tridimensionnelle ayant la structure de verrouillage de porte selon la revendication 1, dans laquelle la structure de verrouillage de porte (4) comprend un élément de trou de verrouillage (41) fixé au panneau de porte (2) et comprend une structure de verrouillage (42) fixée au boîtier (1), l'élément de trou de verrouillage (41) comprend un trou de verrouillage (411), la structure de verrouillage (42) comprend un élément de pivot (421), l'actionneur (5) entraînant l'élément de pivot (421) pour être inséré dans le trou de verrouillage (411) pour verrouiller le panneau de porte (2), l'actionneur (5) entraîne l'élément pivot (421) à se détacher du trou de verrouillage (411) pour libérer ainsi le panneau de porte (2), la position de verrouillage étant une position qui insère l'élément pivot (421) dans le trou de verrouillage (411), et la position de déverrouillage étant une position qui détache l'élément pivotant (421) du trou de verrouillage (411).

9. L'imprimante tridimensionnelle ayant la structure de verrouillage de porte selon la revendication 8, dans laquelle une plaque de blocage (13) s'étend d'un côté de l'ouverture (12) du boîtier (1), le panneau de porte (2) étant bloqué par la plaque de blocage (13) et le capteur de panneau de porte (3) est fixé à la plaque de blocage (13).

10. L'imprimante tridimensionnelle ayant la structure de verrouillage de porte selon la revendication 9, dans laquelle la structure de verrouillage (42) est fixée à la plaque de blocage (13).

11. L'imprimante tridimensionnelle ayant la structure de verrouillage de porte selon la revendication 1, comprenant en outre une base d'entraînement (63), dans laquelle la base d'entraînement (63) est installée dans la chambre (11) et mobile en son sein, et l'élément de buse de formation (61) et l'ensemble de buses de coloration (62) étant fixés à la base d'entraînement (63), de sorte que l'élément de buse de formation (61) et l'ensemble de buses de coloration (62) sont mobiles avec la base d'entraînement (63).
